# EUROPEAN PATENT APPLICATION

(11) **EP 4 703 325 A1**
(43) Date of publication of application: **04.03.2026**
(21) Application number: 23932297.7
(22) Date of filing: 12.05.2023
(51) Int. Cl.: C01B 33/037, H01M 4/38, H01M 10/052, F27B 7/36, F27B 7/22, B02C 18/06, B02C 19/06, B04C 9/00, H01M 4/02

(54) **MANUFACTURING METHOD OF SILICON POWDER USING WASTE SILICON SLUDGE, SILICON POWDER FOR MANUFACTURING SECONDARY BATTERY ANODE MATERIAL, AND MANUFACTURING SYSTEM OF SILICON POWDER**

(30) Priority: 28.04.2023 KR 20230056371; 28.04.2023 KR 20230056497; 28.04.2023 KR 20230056498
(71) Applicant: Innox Ecom. Co., Ltd., Asan-si, Chungcheongnam-do 31409 (KR)
(72) Inventor: LEE, Yun-Ho, Daejeon 34070 (KR); KIM, Sung-Tae, Cheonan-si, Chungcheongnam-do 31163 (KR); YOON, Jin-Duk, Asan-si, Chungcheongnam-do 31409 (KR); LEE, Bo-Ram, Asan-si, Chungcheongnam-do 31406 (KR); OH, Eun-Seok, Cheonan-si, Chungcheongnam-do 31246 (KR)
(74) Representative: Zacco Sweden AB
(86) International application number: PCT/KR2023/006515
(87) International publication number: WO 2024/225523

(57) **Abstract**

Disclosed are a method for preparing silicon powders using waste silicon sludge, silicon powders for preparing a secondary battery negative-electrode material, and a system for preparing silicon powders. More specifically, disclosed are a method for preparing silicon powders by recovering and recycling (upcycling) waste silicon sludge produced in the solar power industry and semiconductor wafer production process as a useful resource, thereby efficiently preparing high-quality silicon powders that may be used as a negative-electrode material for an energy storage device, silicon powders for a secondary battery negative-electrode material as prepared by the method, and a system for preparing the silicon powders.

## Description

### FIELD

The present disclosure relates to a method for preparing silicon powders using waste silicon sludge, silicon powders for preparing a secondary battery negative-electrode material, and a system for preparing silicon powders. More specifically, the present disclosure relates to a method for preparing silicon powders by recovering and recycling (upcycling) waste silicon sludge produced in the solar power industry and semiconductor wafer production process as a useful resource, thereby efficiently preparing high-quality silicon powders that may be used as a negative-electrode material for an energy storage device, silicon powders for a secondary battery negative-electrode material as prepared by the method, and a system for preparing the silicon powders.

### DESCRIPTION OF RELATED ART

Generally, waste silicon sludge produced in the solar power industry and semiconductor wafer production process is simply discarded because no suitable use thereof has been found. The main recycling method thereof known to date is chemically treating and dry metal components included in the waste silicon sludge to create a low-quality silicon ingot for recycling, or simply drying the waste silicon sludge and using the same as a raw material for a refractory material.

However, since the waste silicon sludge can be purified to increase its purity through refinery, many attempts and methods have been proposed to utilize the waste silicon sludge in other industries, such as the energy storage industry, rather than sorting and recycling waste silicon sludge in the solar power industry.

Korean Patent No. 10-2261429 proposes a method of removing cutting oil from the waste silicon sludge, treating the waste silicon sludge with acid, filtering the waste silicon sludge, and then preparing silicon oxide or a silicon/carbon composite using the waste silicon sludge. However, this approach has limitations in that the process is complicated for industrialization, and a large amount of waste liquid, as a byproduct of the process is generated, thereby making mass production thereof difficult.

Korean Patent Application Publication No. 10-2021-0058397 discloses a method for preparing an active material for a negative electrode for an energy storage device by dispersing waste silicon sludge in alcohol, performing separation on the same using the specific gravity, mixing the separation product with a carbon precursor and stirring the mixture, and spray drying the mixture. Korena Patent No. 10-1650184 discloses a method for preparing silicon aggregates by ultrasonic treatment on the waste silicon sludge and then collecting silicon particles therefrom. However, in these approaches, there is a problem that a cost of the process such as separate heat treatment increases.

On the other hand, since the waste silicon sludge contains a diamond cutter, lubricant, and coolant, a scheme for removing an organic component remaining after the cutting of the wafer therefrom is needed. Furthermore, a moisture content of the waste silicon sludge discharged recently is not constant and is in a very diverse range. Thus, efficient removal of the moisture is required.

Therefore, it is necessary to develop a scheme that may efficiently mass-produce silicon powders that may be used as the negative-electrode material for the energy storage device by recycling the waste silicon sludge so as to overcome the above limitations, unlike existing production equipment and process

In addition, silicon powders recovered and purified from the waste silicon sludge may experience shrinkage, coagulation, and entanglement of the powders. Furthermore, physical properties of the powders recovered and purified from the waste silicon sludge may deteriorate due to trace amounts of metal and moisture in the silicon powders during long-term storage thereof. Accordingly, when the silicon powders recovered and purified from the waste silicon sludge are used to prepare the negative-electrode material for the secondary batteries, dispersibility thereof may deteriorate and irreversibility thereof may increase due to issues such as volume expansion.

Accordingly, a new solution is required that may solve the long-term storage issues and physical property deterioration issues of the silicon powders recovered and purified from the waste silicon sludge.

### DISCLOSURE

### TECHNICAL PURPOSE

A purpose of the present disclosure is to provide a method for preparing silicon powders using waste silicon sludge, which may efficiently mass-produce high-purity silicon powders from which moisture and foreign substances such as organic components are removed, so that the waste silicon sludge may be recycled and used as a negative-electrode material for the energy storage device (e.g., secondary batteries).

Furthermore, another purpose of the present disclosure is to provide novel silicon powders which do not experience shrinkage, coagulation, and entanglement of the powders and do not experience deterioration in physical properties thereof even when the powders are stored for a long period of time.

In addition, still another purpose of the present disclosure is to provide a system for preparing silicon powders, which may efficiently mass-produce high-purity silicon powders from which moisture and foreign substances such as organic components are removed, so that the waste silicon sludge may be recycled and used as a negative-electrode material for the energy storage device (e.g., secondary batteries).

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

### TECHNICAL SOLUTION

From the viewpoint of achieving the above purpose, according to one aspect of the present disclosure, there is provided a method for preparing silicon powders, the method comprising: (a) a step of pulverizing waste silicon sludge supplied as a raw material in an air atmosphere; and (b) a step of drying a resultant product pulverized in the step (a) under an inert gas atmosphere to remove moisture therefrom.

In one embodiment of the method, an average particle size of the waste silicon sludge may be in a range of 0 cm exclusive to 20 cm inclusive, wherein a particle size D₅₀ value of the resultant product pulverized in the step (a) may be in a range of 0 µm exclusive to 50 *µ*m inclusive.

In one embodiment of the method, in the step (a), and the pulverizing of the raw material and removal of moisture and a hydrocarbon organic component therefrom may simultaneously occur.

In one embodiment of the method, the step (a) may be performed in a fluidized bed pulverizing device.

In one embodiment of the method, the step (a) may further include (a') a step of pre-pulverizing the waste silicon sludge supplied as the raw material before the step (a).

In one embodiment of the method, the step (b) may be performed in a gas flow drying scheme, wherein the gas flow drying scheme may be performed using an inert gas free of oxygen.

In one embodiment of the method, the inert gas may include at least one of argon (Ar) gas and nitrogen (N₂) gas.

In one embodiment of the method, when a moisture content may be in a range of 0 wt% inclusive to 3 wt% inclusive, based on 100 wt% of a total weight of the waste silicon sludge, the step (b) may be performed in a low-temperature gas flow scheme at a temperature of 20°C or higher.

In one embodiment of the method, when the moisture content may be in a range of 3 wt% exclusive to 80 wt% inclusive, based on 100 wt% of a total weight of the waste silicon sludge, the step (b) may be performed in a high-temperature gas flow scheme at a temperature of 60°C or higher.

In one embodiment of the method, a moisture content in the silicon powers may be in a range of 5 wt% or lower, based on 100 wt% of a total weight of the silicon powders, wherein a carbon content in the silicon powders may be in a range of 10 wt% or lower, based on 100 wt% of the total weight of the silicon powders.

According to another aspect of the present disclosure, a silicon powder manufactured by a method for manufacturing silicon powder according to an aspect of the present disclosure can be provided.

The silicon powder can be used as an negative-electrode material material for a secondary battery.

From the viewpoint of achieving the above purpose, according to another aspect of the present disclosure, there is provided silicon powders for preparing a secondary battery negative-electrode material, wherein the silicon powders may be obtained from waste sludge produced in a process of manufacturing a semiconductor or a solar cell, wherein the silicon powders have a particle size distribution of a D₅₀ value of 0.1 to 2 µm and a D₉₀ value of 0.5 to 5 µm.

In one embodiment of the silicon powders, the silicon powders have the particle size distribution of a D₁₀ value of 0.01 to 0.5 *µ*m and a D₁₀₀ value of 1 to 10 *µ*m.

In one embodiment of the silicon powders, a moisture content in the silicon powders may be lower than 2 wt%, based on 100 wt% of a total weight of the silicon powders.

In one embodiment of the silicon powders, a total metal content in the silicon powders may be lower than 2 wt%, based on 100 wt% of a total weight of the silicon powders.

In one embodiment of the silicon powders, a carbon content in the silicon powders may be lower than 5 wt%, based on 100 wt% of a total weight of the silicon powders.

From the viewpoint of achieving the above purpose, according to still another aspect of the present disclosure, there is provided a system for preparing silicon powders, the system comprising a rotating kiln, wherein the rotating kiln includes: a plurality of casings arranged in a longitudinal direction of the system, each casing having an inner hollow space; a tube extending through the inner hollow spaces of the plurality of casings and capable of rotating around a horizontal axis; and a heating means disposed in the inner hollow space of at least one casing among the plurality of casings and configured to heat the tube.

In one embodiment of the system, the plurality of casings may include: at least one first casing having the heating means disposed therein; and a second casing having no heating means disposed therein.

In one embodiment of the system, the plurality of casings may include a third casing having a cooling means disposed therein and configured to cool the tube.

In one embodiment of the system, the at least one first casing may include: a first-first casing having a heating means for heating the tube to a temperature range of 100 to 200 °C disposed therein; a first-second casing having a heating means for heating the tube to a temperature range of 200 to 500 °C disposed therein; and a first-third casing having a heating means for heating the tube to a temperature range of 500 to 1000 °C disposed therein.

In one embodiment of the system, the heating means may be formed in a coil shape surrounding around the tube.

In one embodiment of the system, the rotating kiln may further include a raw material supply unit configured to supply a silicon powder raw material and gas to an inner space of the tube, wherein the raw material supply unit includes: a raw material receiving unit for receiving and storing therein the silicon powder raw material; a raw material transfer unit for supplying the silicon powder raw material stored in the raw material receiving unit to the tube; and a gas supply unit for supplying the gas to the inner space of the tube.

In one embodiment of the system, the gas may include an inert gas.

In one embodiment of the system, under a predefined condition, the tube may repeatedly rotate forwardly and reversely so that the silicon powder raw material in the tube may be not discharged out thereof.

In one embodiment of the system, the system for preparing the silicon powders may further comprise a drying and pulverizing device configured to dry and pulverize the waste silicon sludge.

In one embodiment of the system, the drying and pulverizing device may include: a dryer for drying the waste silicon sludge; a rotating pulverizer having a rotating blade for pulverizing the waste silicon sludge; and a fluidized bed pulverizer for pulverizing the waste silicon sludge via collision of fluid flows, wherein the fluidized bed pulverizer may have a funnel-shaped guide tube having a diameter decreasing as the funnel-shaped guide tube extends from a top to a bottom thereof.

In one embodiment of the system, an inner surface of the guide tube may extend in an inclined manner at an angle of 10 to 20° as the inner surface extends from the top to the bottom of the guide tube.

In one embodiment of the system, the drying and pulverizing device may further include a cyclone particle separator, a fine particle collector, and a scrubber.

### TECHNICAL EFFECT

In order to solve the problems and limitations of the conventional approaches as described above, the method for preparing the silicon powders using the waste silicon sludge of the present disclosure has the advantage of efficiently drying the waste silicon sludge having various moisture contents and at the same time, of removing the foreign substances such as organic components efficiently, thereby producing high-quality silicon powders that may be used in secondary batteries.

Furthermore, the silicon powders for the secondary battery negative-electrode material of the present disclosure have a strictly controlled particle size distribution, so that the shrinkage, and agglomeration of the powders are suppressed.

Furthermore, the silicon powders for the secondary battery negative-electrode material of the present disclosure do not exhibit any deterioration in physical properties even when being stored for a long period of time.

In addition, the silicon powders for the secondary battery negative-electrode material of the present disclosure have excellent dispersibility without deterioration in physical properties when being used as a negative-electrode material. Accordingly, the silicon powders for the secondary battery negative-electrode material of the present disclosure may secure reliability and reproducibility of the negative-electrode material when being used as the negative-electrode material.

Furthermore, in order to solve the problems and limitations of the conventional approaches as described above, the system for preparing the silicon powders of the present disclosure may efficiently dry the waste silicon sludge having various moisture contents, and at the same time, remove foreign substances such as metal components and organic components, thereby efficiently producing high-quality silicon powders that may be used in secondary batteries.

In addition to the effects described above, the specific effects of the present disclosure are described together with the specific details for carrying out the disclosure as set forth below herein.

### BRIEF DESCRIPTION OF DRAWINGS

FIG. 1 is a simplified flow diagram of a method for preparing silicon powders using waste silicon sludge according to one embodiment of the present disclosure.
FIG. 2 is a simplified flow diagram of a method for preparing silicon powders using waste silicon sludge according to another embodiment of the present disclosure.
FIG. 3 is a simplified cross-sectional diagram of a rotating kiln included in a silicon powder preparing system according to one embodiment of the present disclosure.
FIG. 4 is a schematic diagram of a drying and pulverizing device included in a silicon powder preparing system according to one embodiment of the present disclosure.
FIG. 5 is a schematic diagram of a silicon powder preparing system according to the present disclosure.

### DETAILED DESCRIPTIONS

The purpose, features, and advantages as described above are described in detail below, and accordingly, a person having ordinary knowledge in the technical field to which the present disclosure belongs may easily implement the technical idea of the present disclosure.

When describing the present disclosure, when it is determined that a specific description of the known technology related to the present disclosure may unnecessarily obscure the gist of the present disclosure, the detailed description thereof will be omitted.

When a person having ordinary skill in the technical field may sufficiently technically meaning infer contents not described herein, the description thereof will be omitted.

A singular expression used herein includes a plural expression unless the context clearly indicates otherwise. As used herein, the terms "including", "containing", "having", etc. should not be interpreted as necessarily including all of various components described herein, and should be interpreted as not including some of the components, or further including additional components.

### <Method for Preparing Silicon Powders>

First, a method for preparing silicon powders using waste silicon sludge according to an embodiment of the present disclosure is described in detail.

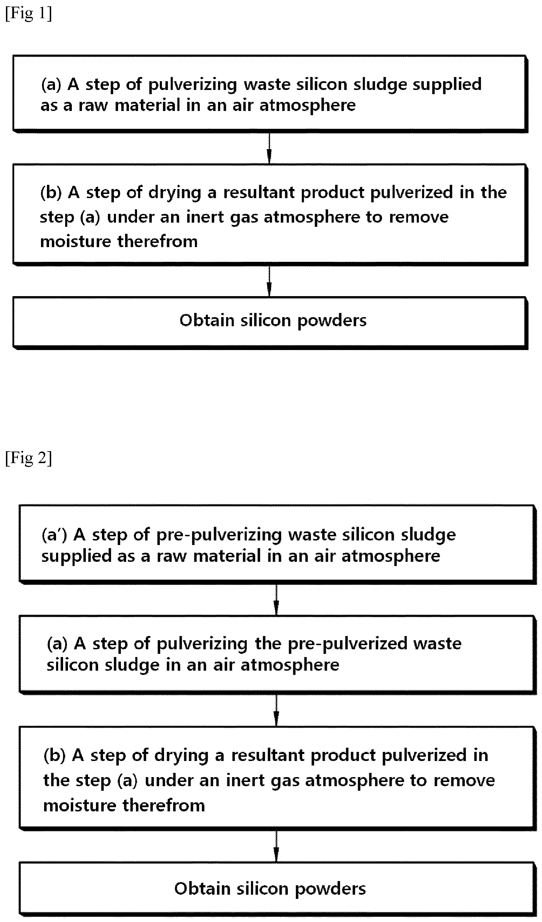

With reference to FIG. 1, the present disclosure may provide a method for preparing silicon powders using waste silicon sludge, including (a) a step of pulverizing waste silicon sludge supplied as a raw material in an air atmosphere to obtain the pulverization result; and (b) a step of drying the pulverization result in the step (a) under an inert gas atmosphere to remove moisture therefrom.

### Step (a)

Waste silicon sludge is aggregated in a so-called filter cake state, and aggregates of various sizes are mixed with each other. Furthermore, the waste silicon sludge is left outside and thus exists in a state containing moisture. When the moisture is not removed therefrom, there is a problem that a silicon dioxide (SiO₂) film may be formed on a silicon surface. In addition, metal component blades such as diamond cutters used for cutting the silicon wafers, etc., and hydrocarbon organic substances such as lubricants and coolants used for cutting remain in the waste silicon sludge. Thus, the waste silicon sludge also contains foreign substances including the metal components and carbon-based organic components.

Therefore, in the step (a), a process of separating aggregated particles of the waste silicon sludge supplied as a raw material from each other and pulverizing the silicon sludge particles of relatively small particles may be performed so that the particles are further broken down so as to have further reduced particle sizes.

The average particle size of the waste silicon sludge as the suppled raw material may be, for example, in a range of 0 cm exclusive to 20 cm inclusive, for example, in a range of 0 cm exclusive to 15 cm inclusive, for example, in a range of 0 cm exclusive to 10 cm inclusive. However, the present disclosure is not necessarily limited thereto, and the waste silicon sludge particles of various particle sizes may be mixed with each other and exist in an aggregated state.

A particle size D₅₀ value of the pulverization result obtained in the above step (a) may be in a range of 0 *µ*m exclusive to 50 µm inclusive, for example, may be in a range of 0 *µ*m exclusive to 30 *µ*m inclusive, for example, may be in a range of 0 *µ*m exclusive to 10 *µ*m inclusive, However, the present disclosure is not necessarily limited thereto. The pulverized powders may not experience shrinkage, coagulation, and agglomeration, and may not experience deterioration of the physical properties due to oxidation, etc. that may occur due to trace amounts of hydrocarbons, moisture, etc. that may remain in the silicon powders even during long-term storage.

The D₅₀ value means a specific particle size value defined such that an amount of the particles having in a range of 0 µm exclusive to the specific particle size value becomes 50% of a total amount of the powders in a particle size distribution. In the present disclosure, the D₅₀ value is obtained by adding 10 to 20 wt% of a target sample to IPA solvent of 100 wt%, ultrasonically treating the solution for 10 to 30 minutes, and then analyzing the treated solution with a particle size analyzer (Cilas).

A pulverizing device that may be used in the above step (a) is not particularly limited as long as an average particle size of the result obtained via the pulverizing using the pulverizing device satisfies the above-described range. In one example, the pulverizing device may perform the above pulverizing of the waste silicon sludge and separating the foreign substances including hydrocarbon organic components and the moisture simultaneously.

For example, a fluidized bed pulverizer may be used in the above step (a). In a more specific example, a cyclone device may be used as the pulverizing device. Specifically, in the step (a), the waste silicon sludge as supplied may be broken into small pieces through a collision process between particles in the fluidized bed pulverizer while moving along with a high-speed gas. At this time, hydrocarbon organic components, moisture, etc. attached to the silicon sludge are removed therefrom as fine particles. Thus, the silicon sludge may be pulverized and the foreign substances may be removed therefrom at the same time.

Optionally, when the silicon sludge particles as the supplied raw material contain a very excessive amount of moisture, a high-temperature air stream (for example, approximately 400°C or lower) may be further supplied to the pulverizing device so that a portion of the moisture may be removed therefrom in the pulverizing process of the step (a).

Referring to FIG. 2 according to one embodiment of the present disclosure, in order to more effectively perform the pulverizing process of the step (a), when the agglomeration of the waste silicon sludge supplied as the raw material is excessive or a large amount of sludge with large particle size exists, (a') a step of pre-pulverizing the waste silicon sludge may be further included in the method before the step (a). In this way, a total of two pulverizing steps may be performed: the (a') pre-pulverizing step and the (a) pulverizing step, or only the (a) pulverizing step may be performed alone. The former or latter approach may be selected depending on the particle agglomeration state and the particle size state of the waste silicon sludge supplied as the raw material.

For example, the (a') pre-pulverizing step may be performed in a general pulverizing device, and the average particle size of the pre-pulverized resultant may be, for example, in a range of 0 cm exclusive to 15 cm inclusive, for example, in a range of 0 cm exclusive to 3 cm inclusive, for example, in a range of 0 cm exclusive to 1 cm inclusive. However, the present disclosure is not necessarily limited thereto.

The pulverizing device that may be used in the (a') step is not particularly limited, but may include, for example, a ball mill, a bead mill, a blade mill, an air mill, a jet mill, a rod mill, a roller mill, a jaw crusher, an impact crusher, a wheeler mill, a hammer mill, etc.

### Step (b)

The step (b) is a drying process performed under an inert gas atmosphere to more effectively remove moisture from the resultant product of the step (a).

According to an embodiment of the present disclosure, in order to quickly dry the moisture, the step (b) may be performed using a hot gas flow drying scheme that vaporizes and removes the moisture using a high-speed flow of high-temperature gas. The gas supplied in the hot gas flow drying scheme may be the inert gas from which oxygen has been removed to prevent additional oxidation. Since the inert gas is used in the hot gas flow drying scheme according to the present disclosure, the drying scheme may be performed under the inert gas atmosphere.

According to an embodiment of the present disclosure, the inert gas in the step (b) may include at least one of argon (Ar) gas and nitrogen (N₂) gas, and for example, the gas flow drying may be performed using the nitrogen gas.

The waste silicon sludge is left outside and exists in a state containing the moisture. The waste silicon sludge is discharged from various solar power industries and many factories, such that a moisture content in the waste silicon sludge is not constant.

The drying process to remove the moisture therefrom requires applying heat energy along with the gas flow drying. Thus, it is desirable to control the drying temperature to vary based on the moisture content in the waste silicon sludge in order to maximize energy efficiency which has recently become an important issue.

According to an embodiment of the present disclosure, when the moisture content is in a range of 0 wt% inclusive to 3 wt% inclusive, based on 100 wt% of a total weight of the waste silicon sludge, the step (b) may be performed in a low-temperature gas flow scheme in which, for example, the temperature may be 20 °C or higher, for example, the temperature may be 40 °C or higher, and for example, the temperature may be 60 °C or higher. However, the present disclosure is not necessarily limited thereto. Furthermore, since the drying process is a process for removing the moisture therefrom, an upper limit of the temperature condition in the low-temperature gas flow scheme is not specifically set. However, in order to avoid using excessive heat source from the viewpoint of energy efficiency, the temperature may be, for example, a temperature of 200°C or lower, for example, a temperature of 150°C or lower, for example, a temperature of 120°C or lower. However, the present disclosure is not necessarily limited thereto.

According to an embodiment of the present disclosure, when the moisture content is in a range of 3 wt% exclusive to 80 wt% inclusive based on the total weight of 100 wt% of waste silicon sludge, the step (b) may be performed in a high-temperature gas flow scheme, in which the temperature and may be, for example, a temperature of 80°C or higher, for example, a temperature of 100°C or higher, for example, a temperature of 200°C or higher, for example, a temperature of 300°C or higher. However, the present disclosure is not necessarily limited thereto. Furthermore, since the drying process is a process for removing the moisture therefrom, an upper limit of the temperature condition in the high-temperature gas flow scheme is not specifically set. However, in order to avoid using excessive heat source from the viewpoint of energy efficiency, the temperature may be, for example, a temperature of 500°C or lower, for example, a temperature of 400°C or lower, for example, a temperature of 350°C or lower, However, the present disclosure is not necessarily limited thereto.

The gas flow drying of the step (b) may supply gas under an atmospheric pressure condition, and a flow rate of the supplied gas may be adjusted depending on selected equipment.

The method for preparing the silicon powders of the present disclosure additionally introduces the dried powders into a hydrogen reduction furnace and performs hydrogen reduction thereon, thereby removing a silicon oxide film existing on the surface of silicon powders, thereby further improving the quality of the silicon powders as produced.

The method for preparing the silicon powders of the present disclosure may be performed in a single apparatus in which the steps (a) and (b) may be performed sequentially, depending on the apparatus for preparing the silicon powders. For example, the pulverizing device may be attached to a top of the cyclone device to manufacture the single apparatus in which the pulverizing step and the drying step may be performed together with each other or sequentially.

In the silicon powders as obtained through the steps (a) and (b) according to the method for preparing the silicon powders of the present disclosure, the moisture content may be, for example, 5 wt% or lower, for example, 3 wt% or lower, for example, 2 wt% or lower, based on the total weight of the silicon powders, and the carbon content may be, for example, 10 wt% or lower, for example, 8 wt% or lower, for example, 5 wt% or lower, based on the total weight of the silicon powders. Thus, the silicon powders having excellent quality may be obtained.

The silicon powders of the present disclosure may be used as a material for an energy storage device, and may be used as a negative-electrode material for a secondary battery, in one example.

### <Silicon powders>

Next, the silicon powders according to another embodiment of the present disclosure are described in detail.

The silicon powders according to another embodiment of the present disclosure may preferably be used as a secondary battery negative-electrode material.

The silicon powders for the secondary battery negative-electrode material of the present disclosure are silicon powders obtained from the waste sludge produced in the process of manufacturing semiconductors and solar cells, and have a particle size distribution with a D₅₀ value of 0.1 to 2 *µ*m and a D₉₀ value of 0.5 to 5 *µ*m.

In this regard, the D50 value and D90 value refer to the particle size values that account for 50% and 90%, respectively, in the order of the smallest particle size in the distribution of the entire powder. The D₅₀ value and D₉₀ value may be measured with a particle size analyzer (Cilas).

The silicon powders for the secondary battery negative-electrode material of the present disclosure are obtained by recovering and refining the waste sludge produced during the semiconductor and solar cell manufacturing process. In particular, the particle size distribution thereof is controlled.

The D₅₀ value of the silicon powders for the secondary battery negative-electrode material of the present disclosure may be controlled to have a range of 0.1 to 2 *µ*m, and the D₉₀ value may be controlled to have a range of 0.5 to 5 µm, so that shrinkage, coagulation, and agglomeration of the powders may be suppressed, and the deterioration of physical properties thereof that may otherwise occur due to trace amounts of metal and moisture in the silicon powders even during long-term storage may be suppressed. In addition, the silicon powders for the secondary battery negative-electrode material with the particle size distribution controlled as described above may ensure reliability and reproducibility of the secondary battery negative-electrode material when being used for the secondary battery negative-electrode material.

The D₅₀ value of the silicon powders for the secondary battery negative-electrode material of the present disclosure is controlled to have a range of 0.1 to 2 *µ*m, preferably 0.3 to 1 µm, and more preferably 0.5 to 0.9 *µ*m.

In addition, the D₉₀ value of the silicon powders for the secondary battery negative-electrode material of the present disclosure is controlled to have a range of 0.5 to 5 *µ*m, preferably 0.8 to 4 *µ*m, and more preferably 1 to 3.5 *µ*m.

The silicon powders for the secondary battery negative-electrode material with the particle size distribution as controlled as above may not experience shrinkage, coagulation, and agglomeration of the powders, and may not experience deterioration of physical properties thereof that may otherwise occur due to trace amounts of metal and moisture in the silicon powders even during long-term storage. In addition, the silicon powders for the secondary battery negative-electrode material with the particle size distribution controlled as described above may ensure reliability and reproducibility of the secondary battery negative-electrode material when being used for the secondary battery negative-electrode material.

Furthermore, preferably, the silicon powders for the secondary battery negative-electrode material of the present disclosure may have a particle size distribution having a D₁₀ value of 0.01 to 0.5 µm and a D₁₀₀ value of 1 to 10 *µ*m.

In addition, the silicon powders for the secondary battery negative-electrode material of the present disclosure are obtained from the waste sludge produced during the semiconductor and solar cell manufacturing process as described above. Thus, impurities or moisture may be contained in the waste sludge as the raw material. However, the impurities or moisture contained in the raw material have been removed from the silicon powders for the secondary battery negative-electrode material of the present disclosure using the method for preparing the silicon powders as described above.

Accordingly, the silicon powders for the secondary battery negative-electrode material of the present disclosure preferably have a moisture content lower than 2 wt%, more preferably, the moisture content lower than 1 wt%, based on 100 wt% of the total weight via the moisture removal process of the method for preparing the silicon powders as described above.

In addition, the silicon powders for the secondary battery negative-electrode material of the present disclosure may include a trace amount of a metal such as Al, Fe, and Cu in a ppm unit. In this regard, the silicon powders for the secondary battery negative-electrode material of the present disclosure may contain the above metal components at a content lower than 2 wt%, more preferably, lower than 1 wt%.

Preferably, the silicon powders for the secondary battery negative-electrode material of the present disclosure may be prepared from the method for preparing the silicon powders according to one embodiment of the present disclosure as described above.

### <System for Preparing Silicon Powders>

Next, the system for preparing silicon powders according to another embodiment of the present disclosure is described in detail.

### Rotating kiln

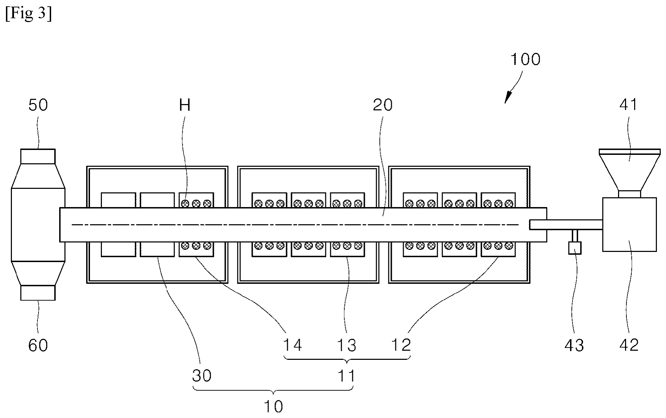

Referring to FIG. 3, the system for preparing silicon powders of the present disclosure includes a rotating kiln 100.

First, the rotating kiln 100 included in the preparing system of the present disclosure is described in detail.

Referring to FIG. 3, the system for preparing silicon powders of the present disclosure includes the rotating kiln 100 having a plurality of hollow casings 10 arranged in a longitudinal direction of the kiln, a tube 20 extending through the hollows of the plurality of casings 10 and in the longitudinal direction of the kiln, and a heating means H for heating the tube 20, wherein the heating means is disposed in the hollow of at least one of the plurality of casings 10.

Referring to FIG. 3, each of the plurality of casings 10 has the hollow space defined therein. The plurality of casings 10 are arranged in the longitudinal direction, that is, in the horizontal direction.

In FIG. 3, each of the plurality of casings 10 is illustrated having a box shape. However, as long as each casing has a structure surrounding the tube 20, the shape of the casing 10 is not particularly limited.

The heating means H for heating the tube 20 is disposed in the hollow space of the at least one casing among the plurality of casings 10. The heating means H may be formed in a coil shape that surrounds the tube as illustrated in FIG. 3. However, embodiments of the present disclosure are not limited thereto.

As illustrated in FIG. 3, the plurality of casings 10 may be arranged in the longitudinal direction of the kiln and a plurality of heating means H may be respectively disposed in the plurality of casings 10 so as to apply heat in different temperature ranges to the tube 20. Accordingly, the plurality of heating means H may provide a temperature gradient in the longitudinal direction of the tube 20.

Preferably, the plurality of casings 10 may include first casings 11, each having the heating means H for heating the tube 20 disposed therein, and second casings 30 in which no heating means is disposed.

In this regard, the first casings 11 may include a first-first casing 12 having the heating means H for heating the tube 20 to a temperature range of 100 to 200 °C received therein, a first-second casing 13 having the heating means H for heating the tube 20 to a temperature range of 200 to 500 °C received therein, and a first-third casing 14 having the heating means H for heating the tube 20 to a temperature range of 500 to 1000 °C received therein.

Accordingly, the plurality of casings 10 may provide a temperature gradient of various temperature ranges to the tube 20.

Furthermore, the plurality of casings 10 may further include a third casing (not shown) having a cooling means (not shown) for cooling the tube received therein. In this regard, the cooling means may be a device such as a cooling module.

Next, referring to FIG. 3, the rotating kiln 100 of the present disclosure includes the tube 20 that extends thorough the plurality of casings 10 and may be rotatable around a horizontal axis.

The tube 20 may be formed as a cylindrical tube with an empty inner space. However, a cross section of the tube 20 is not necessarily limited to a circle and may have various shapes such as a triangle, a square, and a hexagon.

The raw material for the silicon powders moves along the longitudinal direction of the tube 20 and in the tube 20. The raw material for the silicon powders may move along the longitudinal direction of the tube 20 and in the tube under the rotation of the tube 20. To this end, screw-shaped partition walls may be formed inside the tube 20 so that the silicon powders may move along the screw-shaped partition walls. Furthermore, the tube 20 may extend in an inclined manner to facilitate the movement of the raw material for the silicon powders.

The tube 20 extends through the hollow spaces of the plurality of casings 10. As described above, the plurality of heating means respectively disposed in the plurality of casings 10 may provide a temperature gradient of various temperature ranges to the tube 20. Accordingly, the raw material for the silicon powders moving along the longitudinal direction and in the tube 20 may be heat-treated in various temperature ranges under the heat supplied from the plurality of heating means in the plurality of casings.

In addition, referring to FIG. 3, the rotating kiln 100 may further include a raw material supply unit that supplies the silicon powder raw material and gas to the inside of the tube 20.

Preferably, the raw material supply unit may include a raw material receiving unit 41 into which silicon powder raw material is input and stored, a raw material transfer unit 42 that supplies the silicon powder raw material stored in the raw material receiving unit 41 to the tube 20, and a gas supply unit 43 that supplies the gas to the inside of the tube.

In this regard, the gas may include an inert gas, and the inert gas may include at least one of argon (Ar) gas and nitrogen (N₂) gas. For example, nitrogen gas may be used.

Referring to FIG. 3, the silicon powder raw material having traveled through the tube 20 may be discharged from an outlet 60, and the remaining gas may be removed from the raw material by a residual gas separator 50.

Furthermore, under a certain condition, the rotating kiln 100 of the present disclosure may operate so that forward and reverse rotations of the tube 20 may be repeated such that the silicon powder raw material is not discharged.

In this regard, the certain condition may be, for example, a condition under which a failure signal of the rotating kiln 100 is generated.

The operation of the tube 20 as described above may be controlled by a controller (not shown) that controls the rotating kiln 100.

### Drying and pulverizing device

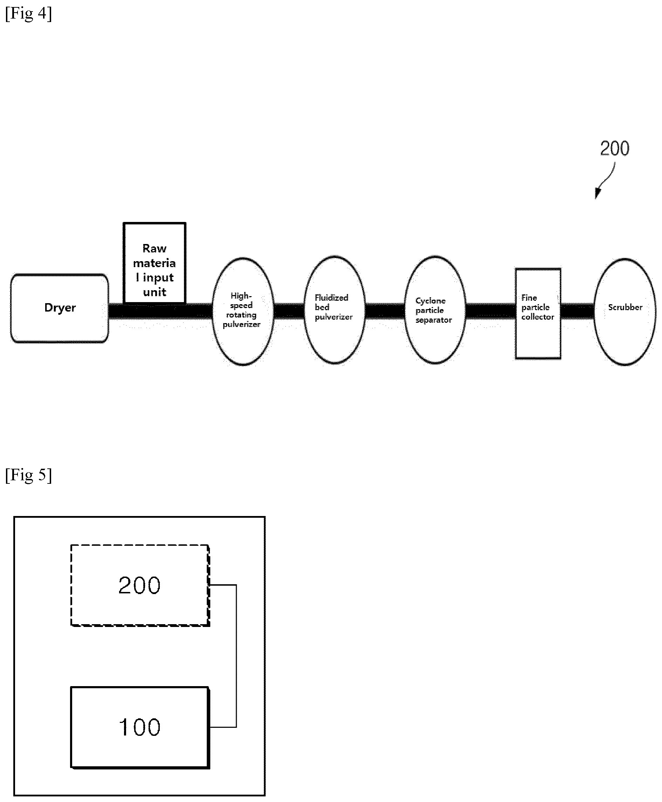

Next, referring to FIG. 4, the silicon powder preparing system of the present disclosure may further include a drying and pulverizing device 200 configured to dry and pulverize the silicon sludge.

The drying and pulverizing device 200 means a device configured to dry and pulverize the waste silicon sludge.

Referring to FIG. 4, the drying and pulverizing device 200 may include a dryer for drying the waste silicon sludge, a rotating pulverizer having a rotating blade for pulverizing the waste silicon sludge, and a fluidized bed pulverizer for pulverizing the waste silicon sludge via collision of fluid flows, wherein the fluidized bed pulverizer includes a funnel-shaped guide tube whose a diameter becomes narrower as the guide tube extends from the top to the bottom thereof.

In this regard, an inner surface of the guide tube may extend in an inclined manner at an angle of 10 to 20° as the inner surface extends from the top to the bottom of the guide tube.

In addition, the drying and pulverizing device 200 may further include a cyclone particle separator, a fine particle collector, and a scrubber.

The waste silicon sludge is first fed into the dryer, and the dryer dries the waste silicon sludge with hot air at 200 to 250°C.

Next, the dried waste silicon sludge is pulverized by the rotating pulverizer and the fluidized bed pulverizer. As described above, the waste silicon sludge is first pulverized by the rotating blade of the rotating pulverizer, and then the waste silicon sludge is pulverized by the fluidized bed pulverizer. In this regard, a high-temperature and high-speed fluid may be supplied to the fluidized bed pulverizer at a speed of 25 to 30 m³/hr. The nitrogen gas may be used as the high-temperature and high-speed fluid.

The silicon powders discharged from the fluidized bed pulverizer may pass through the cyclone particle separator, the fine particle collector, and the scrubber in that order.

As described above, the gas is removed from the silicon powders discharged from the fluidized bed pulverizer by the cyclone particle separator and then the silicon powders flow to the fine particle collector. The fine particles that may not be collected by the cyclone particle separator may be finally collected through a bag filter (not shown), and ultrafine particles that have passed through the bag filter may be finally collected by the scrubber, and discharged therefrom.

In this regard, in order to induce smooth gas flow and pulverize the silicon particles, it is desirable that the inner surface of the guide tube may extend in an inclined manner at an angle of 10 to 20° as the inner surface extends from the top to the bottom of the guide tube. For example, the inner surface of the guide tube may extend in an inclined manner at an angle of 15° as the inner surface extends from the top to the bottom of the guide tube. As mentioned above, the lump-shaped silicon along with the high-temperature nitrogen gas flow moves into the top of the funnel-shaped tube and falls down to the bottom thereof. While passing through the funnel-shaped tube, the gas reaches the bottom while a certain volume of the gas is compressed, and thus the gas speed increases by up to 20% compared to the inflow speed. This gas having the increased speed may act as a driving force to rotate and wear the lump-shaped silicon at a high speed.

The fluidized bed pulverizer has a funnel-shaped bottom gently inclined with respect to the ground, so that large lump-shaped silicon gathers on a center of the bottom. The lumps falling down from the top to the bottom may naturally collide with the lumps gathered on the center of the bottom and thus is pulverized.

Meanwhile, the lump-shaped silicon filter cake not yet collected continues to rotate while being positioned under the fluidized bed pulverizer, and goes through the drying, rotation, collision, and separation processes until the particles are finally dried and separated.

However, when too many silicon particles are supplied, there is a problem that the rotation stops and the particles accumulate on the bottom, thereby blocking the flow. Considering this situation, the supply speed of the silicon raw material to be dried is preferably about 70 to 120 kg/hr, for example. When the supply speed of the silicon raw material exceeds 120 kg/hr, there is a problem that the drying quality may deteriorate and the silicon lumps may not be pulverized well. On the other hand, when the supply speed of the raw material is lower than 70 kg/hr, a production yield may decrease, so that mass productivity may decrease.

Referring to FIG. 5, FIG. 5 illustrates a conceptual diagram of the silicon powder preparing system according to the present disclosure. The silicon powder preparing system of the present disclosure includes the rotating kiln 100 as described above, and further includes the drying and pulverizing device 200 for drying and pulverizing the silicon powder raw material.

The silicon powder raw material that has passed through the above-described drying and pulverizing device 200 moves to the above-described rotating kiln 100in which the silicon powder raw material is subjected to the heat treatment. The silicon powder raw material that has been heat-treated in the above-described rotating kiln 100 is finally refined so as to be used as the material for the negative electrode of the energy storage device (e.g., a secondary battery).

In addition, preferably, the system for preparing the silicon powders of the present disclosure may be used in the method for preparing the silicon powders of the present disclosure as described above, and may be used for preparing the silicon powders of the present disclosure as described above.

Hereinafter, a configuration and an effect of the present disclosure will be described in more detail through a preferred example of the present disclosure. However, this is presented as a preferred embodiment of the present disclosure, and the present disclosure cannot be interpreted as being limited by this example in any sense.

### <Example>

### 1. Preparation of silicon powders

### (1) Present Example 1

100 kg of a filter cake of silicon powders with a moisture content of 45 wt% was prepared as a raw material to be supplied, and pulverizing was performed thereon at room temperature (23 to 25°C), at a speed of 30 to 60 Hz/bead, and at a supply speed of 3 to 10 kg/min using a roll mill pulverizing device (available from INNOX ECOM CO.,LTD.) with a 2-axis crushing shaft (wet) and a 1-axis tunnel crushing shaft (wet).

The pulverized silicon powders were fed into a cyclone device (available from INNOX ECOM CO.,LTD.). The drying temperature of the dryer was set to 60°C, and hot nitrogen gas flow-based drying was performed on the pulverized silicon powders for less than 5 minutes using nitrogen gas.

The characteristics of the silicon powder as prepared according to Present Example 1 are as shown in Table 1 as set forth below.

### (2) Present Examples 2 to 3, and Comparative Examples 1 to 3

Silicon powders of each of Present Example 2, Present Example 3, and Comparative Examples 1 to 3 having particle size distributions as shown in Table 1 as set forth below were prepared in the same manner as in Present Example 1.

**Table 1**

| | Particle size distribution (*µ*m) | | | | Moisture content (weight%) | Metal content (weight%) | Carbon content (weight%) |
|---|---|---|---|---|---|---|---|
| | D₁₀ | D₅₀ | D₉₀ | D₁₀₀ | | | |
| Present Example 1 | 0.21 | 0.84 | 1.51 | 3.23 | 0.61 | 0.05 | 0.55 |
| Present Example 2 | 0.29 | 0.99 | 2.32 | 4.80 | 0.71 | 0.05 | 0.76 |
| Present Example 3 | 0.31 | 1.31 | 2.59 | 4.91 | 0.76 | 0.05 | 0.67 |
| Comparative Example 1 | 1.20 | 2.5 | 4.8 | 5.17 | 0.88 | 0.05 | 0.66 |
| Comparative Example 2 | 1.17 | 1.8 | 5.1 | 6.98 | 0.77 | 0.05 | 0.77 |
| Comparative Example 3 | 1.49 | 2.7 | 6.4 | 8.21 | 0.77 | 0.05 | 0.77 |

The particle size distribution of the silicon powders as described in Table 1 as set forth above was measured using a particle size analyzer (Cilas).

In addition, the moisture content of the silicon powders was analyzed based on a measuring result of change in a weight of the sample in a drying oven. The metal content was measured using an ICP-OES device, and the carbon content was measured using a carbon analyzer (CS995).

### 2. Property Evaluation

The dispersion stability of the silicon powders according to each of the above-described Present Examples and Comparative Examples was evaluated.

Each silicon slurry was prepared using the silicon powders of each of Present Examples 1 to 3 and Comparative Examples 1 to 3.

Specifically, the silicon powders of each of Present Examples 1 to 3 and Comparative Examples 1 to 3 and NMP were mixed with each other at a silicon content of 10 wt% to prepare a slurry which in turn was treated with 20 kHz ultrasonic waves at 500 Watts for 30 minutes in a continuous circulation manner to prepare each silicon slurry.

In order to evaluate the dispersion stability of each silicon slurry, each silicon slurry was stored in a cylinder having a height marking, and then, whether or not layer separation occurred over time was observed. A height of a portion of the slurry excluding a clear upper liquid layer separated as an upper layer was measured as a % of an initial height of the slurry. In this regard, a result of calculating the height of the portion of the slurry excluding the clear upper liquid layer separated as the upper layer as % of the initial height thereof is described in Table 2 as set forth below.

**Table 2**

| | Present Example 1 | Present Example 1 | Present Example 1 | Comparative Example 1 | Comparative Example 1 | Comparative Example 1 |
|---|---|---|---|---|---|---|
| Ratio (%) of height of portion of slurry excluding separated clear upper liquid layer relative to initial height thereof | 87 | 86 | 87 | 74 | 71 | 70 |

Based on the test result as set forth above, it may be identified that Present Examples according to the present disclosure have superior long-term storage stability compared to Comparative Examples.

Therefore, the silicon powders according to the present disclosure have excellent long-term storage stability, prevent deterioration of physical properties thereof, and may be used for preparing the negative-electrode material with excellent reversibility.

Although the present disclosure has been described above, the present disclosure is not limited to the embodiments disclosed herein, and it is obvious that various modifications thereto may be made by those skilled in the art within the scope of the technical idea of the present disclosure. In addition, even when the effects according to the configuration of the present disclosure were not explicitly described while describing the embodiments of the present disclosure, it is obvious that the effects predictable from the configuration should be acknowledged.

### Reference numerals

100 : Rotating kiln
10 : Casing
11 : First casing
12 : First-first casing
13 : First-second casing
14 : First-third casing
20: Tube
30 : Second casing
41 : Raw material receiving unit
42 : Raw material transfer unit
43 : Gas supply unit
50 : Residual gas separator
60 : Outlet
200 : Drying and pulverizing device

## Claims

1. A method for preparing silicon powders, the method comprising:
(a) a step of pulverizing waste silicon sludge supplied as a raw material in an air atmosphere; and
(b) a step of drying a resultant product pulverized in the step (a) under an inert gas atmosphere to remove moisture therefrom.

2. The method for preparing the silicon powders of claim 1, wherein an average particle size of the waste silicon sludge is in a range of 0 cm exclusive to 20 cm inclusive,
wherein a particle size D₅₀ value of the resultant product pulverized in the step (a) is in a range of 0 µm exclusive to 50 µm inclusive.

3. The method for preparing the silicon powders of claim 1, wherein in the step (a), and the pulverizing of the raw material and removal of moisture and a hydrocarbon organic component therefrom simultaneously occur.

4. The method for preparing the silicon powders of claim 1, wherein the step (a) is performed in a fluidized bed pulverizing device.

5. The method for preparing the silicon powders of claim 1, wherein the step (a) further includes (a') a step of pre-pulverizing the waste silicon sludge supplied as the raw material before the step (a).

6. The method for preparing the silicon powders of claim 1, wherein the step (b) is performed in a gas flow drying scheme,
wherein the gas flow drying scheme is performed using an inert gas free of oxygen.

7. The method for preparing the silicon powders of claim 6, wherein the inert gas includes at least one of argon (Ar) gas and nitrogen (N₂) gas.

8. The method for preparing the silicon powders of claim 1, wherein when a moisture content is in a range of 0 wt% inclusive to 3 wt% inclusive, based on 100 wt% of a total weight of the waste silicon sludge, the step (b) is performed in a low-temperature gas flow scheme at a temperature of 20°C or higher.

9. The method for preparing the silicon powders of claim 1, wherein when the moisture content is in a range of 3 wt% exclusive to 80 wt% inclusive, based on 100 wt% of a total weight of the waste silicon sludge, the step (b) is performed in a high-temperature gas flow scheme at a temperature of 60°C or higher.

10. The method for preparing the silicon powders of claim 1, wherein a moisture content in the silicon powers is in a range of 5 wt% or lower, based on 100 wt% of a total weight of the silicon powders,
wherein a carbon content in the silicon powders is in a range of 10 wt% or lower, based on 100 wt% of the total weight of the silicon powders.

11. Silicon powders for preparing a secondary battery negative-electrode material, wherein the silicon powders are obtained from waste sludge produced in a process of manufacturing a semiconductor or a solar cell,
wherein the silicon powders have a particle size distribution of a D₅₀ value of 0.1 to 2 µm and a D₉₀ value of 0.5 to 5 *µ*m.

12. The silicon powders for preparing the secondary battery negative-electrode material of claim 11, wherein the silicon powders have the particle size distribution of a D₁₀ value of 0.01 to 0.5 µm and a D₁₀₀ value of 1 to 10 *µ*m.

13. The silicon powders for preparing the secondary battery negative-electrode material of claim 11, wherein a moisture content in the silicon powders is lower than 2 wt%, based on 100 wt% of a total weight of the silicon powders.

14. The silicon powders for preparing the secondary battery negative-electrode material of claim 11, wherein a total metal content in the silicon powders is lower than 2 wt%, based on 100 wt% of a total weight of the silicon powders.

15. The silicon powders for preparing the secondary battery negative-electrode material of claim 11, wherein a carbon content in the silicon powders is lower than 5 wt%, based on 100 wt% of a total weight of the silicon powders.

16. A system for preparing silicon powders, the system comprising a rotating kiln,
wherein the rotating kiln includes:
a plurality of casings arranged in a longitudinal direction of the system, each casing having an inner hollow space;
a tube extending through the inner hollow spaces of the plurality of casings and capable of rotating around a horizontal axis; and
a heating means disposed in the inner hollow space of at least one casing among the plurality of casings and configured to heat the tube.

17. The system for preparing the silicon powders of claim 16, wherein the plurality of casings include:
at least one first casing having the heating means disposed therein; and
a second casing having no heating means disposed therein.

18. The system for preparing the silicon powders of claim 17, wherein the plurality of casings include a third casing having a cooling means disposed therein and configured to cool the tube.

19. The system for preparing the silicon powders of claim 17, wherein the at least one first casing includes:
a first-first casing having a heating means for heating the tube to a temperature range of 100 to 200 °C disposed therein;
a first-second casing having a heating means for heating the tube to a temperature range of 200 to 500 °C disposed therein; and
a first-third casing having a heating means for heating the tube to a temperature range of 500 to 1000 °C disposed therein.

20. The system for preparing the silicon powders of claim 16, wherein the heating means is formed in a coil shape surrounding around the tube.

21. The system for preparing the silicon powders of claim 16, wherein the rotating kiln further includes a raw material supply unit configured to supply a silicon powder raw material and gas to an inner space of the tube,
wherein the raw material supply unit includes:
a raw material receiving unit for receiving and storing therein the silicon powder raw material;
a raw material transfer unit for supplying the silicon powder raw material stored in the raw material receiving unit to the tube; and
a gas supply unit for supplying the gas to the inner space of the tube.

22. The system for preparing the silicon powders of claim 21, wherein the gas includes an inert gas.

23. The system for preparing the silicon powders of claim 16, wherein under a predefined condition, the tube repeatedly rotates forwardly and reversely so that the silicon powder raw material in the tube is not discharged out thereof.

24. The system for preparing the silicon powders of claim 16, wherein the system for preparing the silicon powders further comprises a drying and pulverizing device configured to dry and pulverize the waste silicon sludge.

25. The system for preparing the silicon powders of claim 24, wherein the drying and pulverizing device includes:
a dryer for drying the waste silicon sludge;
a rotating pulverizer having a rotating blade for pulverizing the waste silicon sludge; and
a fluidized bed pulverizer for pulverizing the waste silicon sludge via collision of fluid flows, wherein the fluidized bed pulverizer has a funnel-shaped guide tube having a diameter decreasing as the funnel-shaped guide tube extends from a top to a bottom thereof.

26. The system for preparing the silicon powders of claim 25, wherein an inner surface of the guide tube extends in an inclined manner at an angle of 10 to 20° as the inner surface extends from the top to the bottom of the guide tube.

27. The system for preparing the silicon powders of claim 25, wherein the drying and pulverizing device further includes a cyclone particle separator, a fine particle collector, and a scrubber.
